(19) Europäisches Patentamt
European Patent Office
Office européen des brevets

(11) **EP 1 486 918 A2**

(12) **EUROPÄISCHE PATENTANMELDUNG**

(43) Veröffentlichungstag:
**15.12.2004  Patentblatt 2004/51**

(51) Int Cl.⁷: **G06T 7/00**, G06T 5/00

(21) Anmeldenummer: **04013430.6**

(22) Anmeldetag: **08.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **10.06.2003  DE 10326033**

(71) Anmelder: **hema electronic GmbH**
**73431 Aalen (DE)**

(72) Erfinder: **Louban, Roman, Dr.-Ing.**
**74564 Crailsheim (DE)**

(54) **Verfahren zur adaptiven Fehlererkennung auf einer inhomogenen Oberfläche**

(57)  Die Erfindung betrifft ein Verfahren zur adaptiven Erkennung eines Fehlers *6* auf einer inhomogenen Oberfläche *2*, z.B. einer Metalloberfläche, der auf einem mit einem Kamerasensor aufgenommenen Licht-und-Schatten-Bild mit Hilfe kantenbasierender Segmentierungsmethoden gesucht wird. Alle benötigten lokalen Merkmale werden adaptiv zu den lokalen Helligkeitsbedingungen dynamisch aus dem Grauwertprofil ermittelt, das entlang einer Suchlinie *5* gewonnen wird, mit der ein Testbereich *4* abgetastet werden muss, wobei das Grauwertprofil als Gaußverteilung behandelt wird.

Fig. 1

EP 1 486 918 A2

**Beschreibung**

Die Erfindung betrifft ein Verfahren gemäß dem Oberbegriff des Anspruchs 1.

Insbesondere bezieht sich die Erfindung auf die Erkennung eines Fehlers auf einer inhomogenen Oberfläche, z.B. einer Metalloberfläche, die als Licht-und-Schatten-Bild mittels eines Bildverarbeitungssystems gewonnen wird. Unabhängig von den aufgetretenen globalen und lokalen Oberflächenhelligkeitsschwankungen gewährleistet das Verfahren eine einwandfreie Erkennung aller vorhandenen Fehler, wobei alle benötigten Parameter angepasst zu lokalen Helligkeitsbedingungen aus dem zu untersuchenden Bild dynamisch ermittelt werden.

Es ist Stand der Technik, dass man für die Erkennung eines Fehlers auf einem zu untersuchendem Bild die kantenbasierte Segmentierung (Digitale Bildverarbeitung / Bernd Jähne. - 4. Aufl. - Berlin, Heidelberg, etc.: Springer, 1997) benutzt. Dabei spielt die Kantenerkennung eines Objektes eine zentrale Rolle.

Es ist Stand der Technik, dass man für die generelle Kantensuche eine Umwandlung des gesamten Bildes in ein Kantenbild mit Hilfe verschiedener Kantenfilter (Digitale Bildverarbeitung / Bernd Jähne. - 4. Aufl. - Berlin, Heidelberg, etc.: Springer, 1997) benutzt.

Neben dem erheblichen Rechenaufwand hat diese Methode den Nachteil, dass das Bild durch eine Filterung bearbeitet, d.h. geändert wird, was die Kantenerkennung selbst beeinflusst und damit das Ergebnis verfälscht. Dabei können manche Kanten wegen mangelhaften Kontrasts überhaupt nicht erkannt bzw. zufällige Stellen, die einen ausreichenden Beleuchtungsgradienten aufweisen, fälschlicherweise als Kanten erkannt werden.

Ein weiteres Verfahren (DE 19902401 C2) sieht zuerst eine Binarisierung des Bildes vor. Nach der Binarisierung wird eine Kantendetektion vorgenommen. Um eine Binarisierung durchzuführen, muss ein Schwellwert gebildet werden. Dieser kann entweder vorgegeben oder aus dem Bildinhalt dynamisch ermittelt werden.

Der vorgegebene Schwellwert (DE 4131778 C2) berücksichtigt aber keine Abweichungen, z.B. Beleuchtungsschwankungen, die auf einer Serie von aufeinander folgenden Aufnahmen bzw. auf unterschiedlichen Bereichen des aktuellen Bildes vorhanden sind. Dabei kann das zu untersuchende Bild nicht sauber binarisiert werden, was ebenso eine falsche Erkennung der Kanten verursacht.

Den Schwellwert direkt aus dem Inhalt des aktuellen Bildes zu ermitteln, ist eine Möglichkeit, um das Kantendetektierungsverfahren an das zu untersuchende Bild anzupassen.

Dafür benutzt man z.B. ein Histogramm (EP 0750272 B1, EP 0807297 B1), das die Häufigkeit von einzelnen, im Bild auftretenden Grauwerten darstellt. Aus dem absoluten oder lokalen Maximum bzw. Minimum des Histogramms kann ein Binarisierungsschwellwert entnommen werden.

Wenn das Histogramm jedoch für große Bildbereiche bestimmt wird, neigen Kanten dazu, verschmiert oder sogar zerstört zu werden. Wenn umgekehrt der zu binarisierende Bereich zu klein ist, kann aufgrund geringer Häufigkeiten dieser Bereich nicht sauber binarisiert werden. Das Verfahren, den zu binarisierenden Bildbereich in geeignete Teilstücke zu unterteilen (EP 0750272 B1), ist wiederum auf vorgegebene Parameter angewiesen. Damit verliert das Verfahren seine Flexibilität.

Eine Reihe von Kandidatenbinärbilder aufzunehmen und auszuwerten, welche mit fallenden bzw. mit steigenden Schwellwerten erzeugt wurden, um den bestmöglichen Binarisierungsschwellwert zu finden (EP 0807297 B1), ist sehr aufwändig und zeitraubend und ist vor allem nur in einer sehr beschränkten Anzahl vom Fällen möglich.

Darüber hinaus beeinflusst eine Binarisierung des Bildes die Kantenerkennung und damit verfälscht sie, genauso wie jede andere Bildfilterung, das Ergebnis der Kantendetektierung. Deswegen soll die Kantenerkennung am besten auf dem Originalgrauwertbild erfolgen.

Es ist ferner bekannt, dass man eine Kante aus einem Grauwertbild direkt mittels eines Kantenmodells ermitteln kann (Industrielle Bildverarbeitung / Christian Demant, Bernd Streicher-Abel, Peter Waszkewitz. - Berlin; Heidelberg: Springer, 1998). Das betrifft besonders den Fall, in dem der Ort der Kante bereits bekannt ist. Die Suche nach Kanten mit einem Kantenmodell erfolgt normalerweise auf Suchlinien in einer bestimmten Richtung.

Die Kriterien für die Detektierung einer Kante ergeben sich aus dem Grauwertprofil entlang dieser Suchlinie.

Dabei unterscheidet man zwei Kantenrichtungen: ansteigende und abfallende Kanten. Von einer abfallenden Kante spricht man, wenn das Grauwertprofil von hell nach dunkel verläuft, im umgekehrten Fall hat man eine ansteigende Kante vor sich.

Ein typisches Verfahren benutzt folgende Parameter:

- Kantenhöhe: Zur Detektierung einer gültigen Kante fordert man, dass eine bestimmte Mindestdifferenz der Grauwerte entlang der Suchlinie auftritt. Dies bezeichnet man als Kantenhöhe.
- Kantenlänge: Die Kantenlänge gibt an, auf welcher Strecke die durch die Kantenhöhe festgestellte Mindestdifferenz der Grauwerte auftreten muss.

An diesem Verfahren, das als Stand der Technik gilt, ist nachteilig, dass die vorgegebene Kantenhöhe und Kantenlänge bei jedem zu untersuchenden Bild unverändert bleiben müssen, und damit keine dynamische Anpassung an das aktuelle Bild angeboten wird.

Eine andere Lösung ist vom DE 4435796 C1 bekannt, in dem ein Verfahren zur automatischen Erkennung von Kanten in Bildern beschrieben ist. Mit dessen Hilfe kann eine Kante nach einem vorgegebenen Profil und nach einem vorgegebenen prozentualen Schwellwert, der eine Ähnlichkeitsquote, z.B. mehr als 75%, erreicht hat, ermittelt werden.

Dabei benötigt man aber eine Musterkante, deren Profil weiter benutzt werden soll, und ebenso einen prozentualen Schwellwert als vorgegebenen Parameter. Deswegen bleibt dieses Verfahren vollständig objektspezifisch und bietet keine Anpassung an das zu untersuchende Bild.

Zusammenfassend können die obengenannten Methoden keine flexible und gleichzeitig explizite Kantenerkennung auf einem zu untersuchenden Bild gewährleisten und deswegen auch nicht für eine sichere Fehlererkennung auf einer inhomogenen Oberfläche benutzt werden, auf der sowohl globale als auch lokale Oberflächenhelligkeitsschwankungen auftreten.

Der Erfindung liegt die Aufgabe zugrunde, ein Verfahren zur Fehlererkennung auf einer inhomogenen Oberfläche zu schaffen, das eine einfache, sichere und gleichzeitig explizite Erkennung der Fehler erlaubt. Alle dafür benötigten Merkmale sollen angepasst zu lokalen Helligkeitsbedingungen aus dem zu untersuchenden Bild dynamisch ermittelt und nur für dieses Bild verwendet werden. Ein solches Verfahren ist z.B. bei Reglern ("adaptive Regler") seit langem Stand der Technik. Analog dazu kann das hier beschriebene Verfahren auch als Verfahren zur adaptiven Fehlererkennung genannt werden.

Die Lösung des technischen Problems ergibt sich durch die Merkmale der Patentansprüche 1 bis 11.

Patentgemäß wird die Erkennung eines Fehlers auf einem Bild in einem Testbereich durchgeführt, wobei der Testbereich entlang einer Suchlinie abgetastet werden soll, die in einer angegebenen Richtung, z.B. von oben nach unten, durch den Testbereich verschoben wird.

Zuerst muss die Standardabweichung $\sigma_0$ des Grauwertprofils entlang einer Suchlinie, die quer zur einer typischen Kante zwischen dem Hintergrund und der Oberfläche verläuft, mit Hilfe bekannter konventioneller Rechenmethoden, z.B. die Methode der kleinsten Quadrate, ermittelt werden. Diese dient als kantencharakteristischer Parameter für die Erkennung eines Fehlers.

Dabei geht man davon aus, dass der Fehler genauso wie der Hintergrund beispielsweise immer dunkler als die Oberfläche ist. Ansonsten sollen die Rollen der Oberfläche, des Hintergrundes sowie des Fehlers vertauscht werden.

*Gemäß Anspruch 1* werden alle für die Erkennung eines Fehlers benötigten lokalen Merkmale dynamisch aus dem Grauwertprofil ermittelt, das entlang einer Suchlinie gewonnen wird, mit der ein Testbereich abgetastet werden muss, wobei das Grauwertprofil als Gaußverteilung behandelt wird. Diese Merkmale sollen weiter genutzt werden, um die Parameter für die Detektierung des gesuchten Fehlers zu ermitteln.

Es ist bekannt, dass die Intensitätsverteilung eines Strahles ein Gaußsches Profil aufweist (Technische Optik: Grundlagen und Anwendungen / Gottfried Schröder. - 7.Aufl. -Würzburg: Vogel, 1990 (Kamprath-Reihe), S. 88). Da eine Oberfläche wegen ihrer Reflexion als Strahlquelle betrachtet werden kann, darf eine Helligkeitsverteilung, die von der Oberfläche über die Kante zum Hintergrund geht, mit einer Gaußverteilung beschrieben werden (Digitale Bildverarbeitung / Bernd Jähne. - 4. Aufl. - Berlin, Heidelberg, etc.: Springer, 1997). Dieses Modell hat sich auch als das Beste für die genaue Berechnung der Kantenposition mit Subpixel-Genauigkeit erwiesen (A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991). Deshalb kann für die Beschreibung des Grauwertprofils einer Kante ein Gaußsches Profil angenommen werden.

Ein Histogramm ist eine Häufigkeitsverteilung der Helligkeit auf einer Oberfläche bzw. ihrem Hintergrund. In natürlichen Bildern hat der Bildinhalt meistens ein mit der Ortsfrequenz abfallendes Amplitudenspektrum, wogegen das Rauschen ein im Frequenzbereich etwa konstantes Spektrum aufweist. Daraus folgt, dass das Histogramm sowie das Grauwertprofil auch ein Gaußsches Profil (Methoden der digitalen Bildsignalverarbeitung / Piero Zamperoni. - Braunschweig / Wiesbaden: Friedr. Vieweg & Sohn, 1989) bzw. ein aus mehreren Gaußverteilungen resultierendes Profil (Digitale Bildverarbeitung / Bernd Jähne. - 4. Aufl. - Berlin, Heidelberg, etc.: Springer, 1997) aufweisen.

Der Helligkeitswert, der am häufigsten an einer Oberfläche aufgetreten ist, kann als Helligkeit dieser Oberfläche definiert werden. Dieses Verfahren weist der zu untersuchenden Oberfläche eine objektive Helligkeit $I_{surf}$ zu, solange eine Störung mit einem bestimmten Helligkeitswert nicht eine größere oder vergleichbare Häufigkeit aufweist, als die der Oberflächenhelligkeit $I_{surf}$. Dann ist es nicht mehr möglich zwischen der Störung und der Hauptoberfläche selbst zu unterscheiden (z.B. Schachbrett).

Aus dem Grauwertprofil, das an einer typischen Kante gewonnen wurde, kann mit Hilfe bekannter konventioneller Rechenmethoden, z.B. die Methode der kleinsten Quadrate, die Standardabweichung $\sigma_{0\_min}$ des Gaußschen Profils ermittelt werden. Diese Standardabweichung $\sigma_{0\_min}$ ist eine eindeutige Charakteristik der Kante, die erfindungsgemäß für die Berechnung der Soll-Standardabweichung $\sigma_0$ benutzt werden kann:

$$\sigma_0 = \sigma_{0\_min} + \Delta\sigma \,,$$

wobei: $\Delta\sigma$ - zulässige Abweichung der Standardabweichung $\sigma_0$ von minimalem Wert $\sigma_{0\_min}$ , z.B. 0.5, die nach Erfahrungswerten festgestellt werden muss.

die als kantencharakteristischer Parameter für die Erkennung eines Fehlers dienen wird:

Dann kann die Fehlererkennung im Testbereich folgendermaßen durchgeführt werden.

Ein Grauwertprofil, das entlang der Suchlinie im Testbereich gewonnen wurde, soll nach lokalen Minima und Maxima abgesucht werden. Dafür kann z.B. eine Teststrecke genutzt werden, die entlang des Grauwertprofils verschoben werden soll, wobei lokale Minima und Maxima nicht auf den Randpunkten der Teststrecke liegen dürfen. Diese Methode soll dazu dienen, den Einfluss eines möglichen Rauschens zu unterdrücken. Die Länge der Teststrecke $S_0$ kann patentgemäß folgendermaßen definiert werden:

$$S_0 \geq 4^*\sigma_0.$$

Die Untersuchung des Grauwertprofils innerhalb der Teststrecke $S_0$ soll beispielsweise von links nach rechts durchgeführt werden. Zuerst werden diejenigen Positionen ermittelt, die ein lokales Minimum $I_{min\_loc}$ (*local*) und ein davor liegendes lokales Maximum $I_{max\_loc\_left}$ aufweisen. Diese sollen überprüft werden, ob sie zu einem möglichen Fehler gehören können. Man spricht dabei von einem Kandidat (candidate) zum Fehler. Sofern gilt:

$$I_{min\_loc} \leq I_{cand\_loc\_left} \,,$$

wobei: $I_{cand\_loc\_left}$ - die minimale Helligkeit, die ein Fehlerkandidat und der linken Kante aufweisen soll:

$$I_{cand\_loc\_left} = I_{max\_loc\_left} {}^*\xi_1 \;;$$

$\xi_1$ - der Wendepunktkoeffizient, der die Intensität eines Strahles am Wendepunkt seiner Intensitätsverteilung bestimmt:

$$\xi_1 = e^{-\frac{1}{2}},$$

muss die lokale Standardabweichung $\sigma_{loc\_left}$ des Grauwertprofils zwischen dem gefundenen lokalen Maximum und lokalen Minimum mit Hilfe bekannter konventioneller Rechenmethoden, z.B. die Methode der kleinsten Quadrate, ermittelt und mit der Soll-Standardabweichung $\sigma_0$ verglichen werden. Falls gilt:

$$\sigma_{loc\_left} \leq \sigma_0,$$

kann sich dort die linke Kante eines möglichen Fehlers befinden.

Anschließend muss das Grauwertprofil rechts des gefundenem lokalen Minimums nach dem Auftreten eines weiteren lokalen Maximums bzw. eines Minimum-Maximum-Paares geprüft werden. Falls eins existiert, für das gilt:

$$I_{min\_loc} \leq I_{cand\_loc\_right};$$

wobei: $I_{cand\_loc\_right}$ - die minimale Helligkeit, die ein Fehlerkandidat und der rechten Kante aufweisen soll:

$$I_{cand\_loc\_right} = I_{max\_loc\_right} {}^* \xi_1 \;;$$

und

$$\sigma_{loc\_right} \le \sigma_0,$$

kann sich dort die rechte Kante eines möglichen Fehlers befinden.

Die weitere Untersuchung des Grauwertprofils zwischen den beiden erkannten Kanten eines möglichen Fehlers besteht darin, dass das dort ermittelte Helligkeitsminimum $I_{min\_loc\_abs}$ , welches das absolute Minimum zwischen den beiden lokalen Maxima darstellt, mit dem lokalen maximalen zulässigen Helligkeitswert eines Fehlers $I_{def\_loc}$ *(defect)* verglichen werden muss.:

$$I_{def\_loc} = I_{max\_loc} * \eta_0,$$

wobei:

$I_{max\_loc}$        - der Helligkeitswert, der beispielsweise dem größeren der beiden lokalen Maxima $I_{max\_loc\_left}$ und $I_{max\_loc\_right}$ entspricht;

$\eta_0$        - der Helligkeitsfaktor, der eine allgemeine grundlegende Konstante für die Kantenerkennung darstellt:

$$\eta_0 = \frac{\xi_2}{\xi_1} = e^{-\frac{3}{2}};$$

$\xi_2$        - der Randpunktkoeffizient, der die Intensität eines Strahles an seinem Rand bestimmt:

$$\xi_2 = e^{-2},$$

Sofern gilt:

$$I_{min\_loc\_abs} \le I_{def\_loc},$$

gehört die zu untersuchende Strecke zwischen den beiden gefundenen Kanten zu dem gesuchten Fehler.

Danach soll wieder die linke Kante eines nächstfolgenden Fehlers entlang des Grauwertprofils gesucht werden.

Die genauen Positionen der gefundenen Kanten können nach unterschiedlichen bekannten Verfahren ermittelt werden.

Auf diese Art und Weise muss das ganze Testbereich untersucht werden, wobei die Suchlinie in einer angegebenen Richtung, z.B. von oben nach unten, durch den Testbereich verschoben wird. Alle gefundene Strecken, die zu einem Fehler gehören, sollen dabei markiert werden. Damit werden sämtliche Fehler partiell markiert und mit Hilfe bekannter konventioneller Konturverfolgungsmethoden segmentiert und analysiert.

*Gemäß Anspruch* **2** kann ein Fehler erkannt werden kann, indem die minimale Helligkeit, die ein Fehlerkandidat and der linken Kante $I_{cand\_loc\_left}$ bzw. rechten Kante $I_{cand\_loc\_right}$ aufweisen soll, sowie der lokale maximale zulässige Helligkeitswert eines Fehlers $I_{def\_loc}$ folgendermaßen berechnet werden:

$$I_{cand\_loc\_left} = I_{max\_loc\_left} * ((1- \xi_2) * \xi_1 + \xi_2),$$

$$I_{cand\_loc\_right} = I_{max\_loc\_right} * ((1- \xi_2) * \xi_1 + \xi_2);$$

$$I_{def\_loc} = I_{max\_loc} * ((1 - \xi_2)*\eta_0 + \xi_2).$$

$$\frac{I_{\min\_cand}}{I_{\max\_loc}} \leq \theta_{def\_abs} = (1 - \eta_0).$$

*Gemäß Anspruch 3* kann eine Beschädigung der Oberfläche (z.B. ein Riss) von einem anderem Objekttyp (z.B. eine Verschmutzung), der als Pseudo-Fehler bezeichnet werden kann, unterschieden werden und wird sicher als Fehler identifiziert, wobei zusätzliche lokale Merkmale wie das Auftreten eines Wulstes (bulge) und einer Rinne (hollow) für die Fehlererkennung benutzt werden sollen, die aufgrund des Zerreißens und Entspannens eines Materials, besonders eines Doppelschichtmaterials, an jeder Kante eines Fehlers entstanden sind. Das Grauwertprofil schließt im den entsprechenden Bereichen mit der waagerechten Achse, die dem Niveau der lokalen Oberflächenhelligkeit $I_{surf\_loc}$ entspricht, und der senkrechten Achse, die durch das absolute Minimum des Fehlers verläuft, die Flächen $A_{bul}$ und $A_{holl}$ ein, die zu einem Wulst und zu einer Rinne zurückzuführend sind. Der Wert $I_{surf\_loc}$ kann dabei beispielsweise in der lokalen Umgebung vor dem Wulst mit Hilfe konventioneller Methoden, z.B. Geradeapproximation, ermittelt werden.

Patentgemäß müssen diese Flächen miteinander verglichen werden. Sofern ein lokaler Verhältniswert

$$\vartheta_{loc} = \frac{A_{bul}}{A_{holl}},$$

den minimalen Fehlerschwellwert $\vartheta_{def}$ nicht unterschreitet:

$$\vartheta_{loc} \geq \vartheta_{def},$$

kann ein zu suchender Fehler von einem möglichen Pseudo-Fehler unterschieden werden.

Der minimale Fehlerschwellwert $\vartheta_{def}$ kann, z.B. nach Erfahrungswerten festgestellt und im weiteren als Referenzwert verwendet werden.

*Gemäß Anspruch 4* kann eine Blase auf einer rauen Oberfläche als Fehler auf die gleiche Art und Weise wie eine Beschädigung erkannt werden kann, wobei vor dem oben beschriebenen Verfahren eine Invertierung der Parameter bei der Extremwertsuche oder eine Invertierung des gesamten Grauwertbildes durchgeführt werden muss.

Diese Fehlerform geht an die Oberflächenumformung beim Entstehen einer Blase zurück. Dabei wird die Oberfläche an der Blase heller und in der näheren Blasenumgebung dunkler, was auf eine Erhöhung und Vertiefung der Oberfläche zurückzuführen ist.

*Gemäß Anspruch 5* kann das Grauwertprofil, das entlang einer Suchlinie gewonnen wird, die quer zu einer typischen Kante verläuft und evtl. mehrmals angelegt werden kann, sowohl aus einer einzelnen Pixelreihe als auch als Mittelwertkurve aus mehreren parallel zur Suchlinie liegenden benachbarten Pixelreihen gebildet werden. Die Anzahl der parallel zur Suchlinie liegenden benachbarten Pixelreihen, die jeweils zur Bildung des Grauwertprofils hinzugezogenen werden, kann z.B. als drei festgelegt werden. Damit wird eine sichere und genaue Ermittlung der Soll-Standardabweichung $\sigma_0$ gewährleistet.

*Gemäß Anspruch 6* kann der typische Wert für die Soll-Standardabweichung $\sigma_0$ an der Kante eines Fehlers, die unter konkreten Aufnahmebedingungen ganz spezifisch aussehen kann, nach Erfahrungswerten festgelegt werden.

Das beschriebene adaptive Verfahren erlaubt die Erkennung eines Fehlers, dessen Helligkeit sich von der Oberflächenhelligkeit geringfügig unterscheidet, indem *gemäß Anspruch 7* für die Berechnung der minimalen Helligkeit, die ein Fehlerkandidat und der linken Kante $I_{cand\_loc\_left}$ bzw. an der rechten Kante $I_{cand\_loc\_right}$ aufweisen soll, sowie des lokalen maximalen zulässigen Helligkeitswertes eines Fehlers $I_{def\_loc}$ anstatt des Randpunktkoeffizientes $\xi_2$ ein Helligkeitskoeffizient $\xi$ verwendet wird, dessen Größe im Bereich:

$$\xi_2 \leq \xi < 1$$

nach Erfahrungswerten festgestellt werden kann.

*Gemäß Anspruch 8* kann ein solcher Fehler ebenso erkannt werden, indem für die Berechnung der minimalen Helligkeit, die ein Fehlerkandidat und der linken Kante $I_{cand\_loc\_left}$ bzw. an der rechten Kante $I_{cand\_loc\_right}$ aufweisen soll, anstatt der Konstante $\xi_1$ für das Wendepunktkoeffizient ein Helligkeitsfaktor $\xi$ verwendet wird, dessen Größe im Bereich:

$$\xi_1 \le \xi < 1$$

nach Erfahrungswerten festgestellt werden kann.

*Gemäß Anspruch 9* kann ein solcher Fehler ebenso erkannt werden, indem für die Berechnung des lokalen maximalen zulässigen Helligkeitswertes eines Fehlers $I_{def\_loc}$ anstatt der Konstante $\eta_0$ für die Kantenerkennung ein Helligkeitsfaktor $\eta$ verwendet wird, dessen Größe im Bereich:

$$\eta_0 \le \eta < 1$$

nach Erfahrungswerten festgestellt werden kann.

*Gemäß Anspruch 10* soll nur jede einzelne zu untersuchende Kurve aber nicht das Bild selbst geglättet werden. Damit werden die zu untersuchenden Kurven von originalen Bildwerten gebildet und nicht schon im Voraus verfälscht.

*Gemäß Anspruch 11* soll eine morphologische Filterung für die Glättung der zu untersuchenden Kurven verwendet werden. Diese verursacht keine Verfälschung der zu untersuchenden Kurven, wie beim Einsatz konventioneller Filterungsmethoden, und erlaubt damit eine fehlerfreie Kurvendiskussion.

Durch das hier genannte Verfahren zur adaptiven Fehlererkennung kann auf die Erkennung eines Fehlers auf einer inhomogenen Oberfläche anhand der traditionellen kantenbasierten Segmentierungsmethoden verzichtet werden.

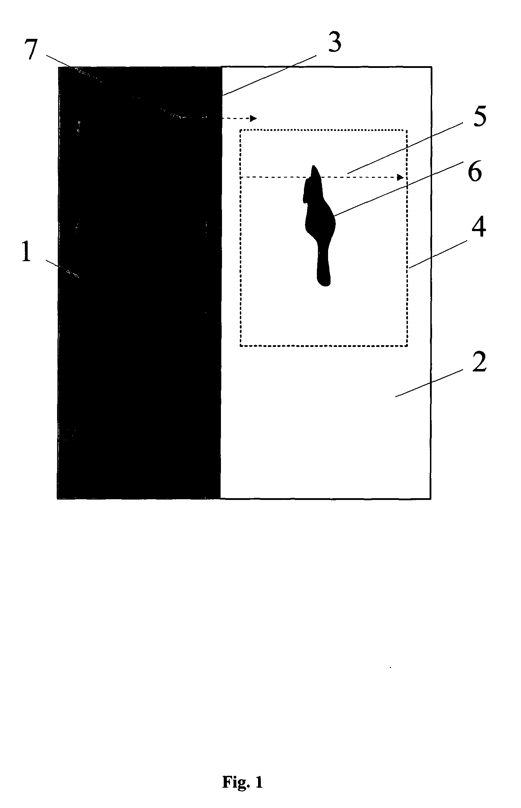

Die Einzelheiten der Erfindung werden in den nachfolgenden Ausführungsbeispielen anhand der **Fig. 1 - 3** erläutert.

Als Beispiel kann angenommen werden, dass ein dunkler Fehler 6 erkannt werden soll, der sich auf einer hellen inhomogenen Oberfläche 2, z.B. Metalloberfläche, vor einem dunklen Hintergrund **1** befindet. Oberfläche und Hintergrund bilden eine typische Kante **3 (Fig. 1).**

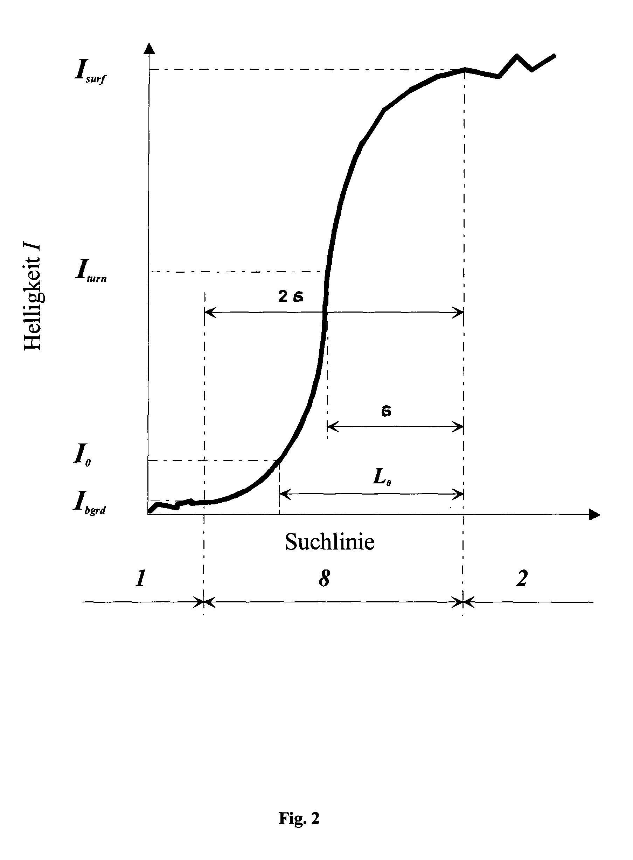

Die Standardabweichung $\sigma_0$ des Grauwertprofils **(Fig. 2),** das entlang einer Suchlinie **7,** die quer zu einer typischen Kante **3** beispielsweise von dem dunklen Hintergrundbereich **1** zum hellen Oberflächenbereich **2** verläuft (**Fig. 1**), kann z.B. mit Hilfe der Methode der kleinsten Quadrate ermittelt werden.

Um alle Merkmale zu definieren, die für eine adaptive Fehlererkennung benötigt werden, soll zuerst ein Verfahren zur adaptiven Kantensuche beschrieben werden, das der Fehlererkennung zugrunde liegt.

Wie bereits oben begründet wurde, weist das Grauwertprofil ein Gaußsches bzw. ein aus mehreren Gaußverteilungen resultierendes Profil auf. Das bedeutet, dass diese Kurven eine Normalverteilung nach Gauß und damit eine exponentielle Funktion darstellen und somit bestimmte Verhältnisse zwischen charakteristischen Punkten besitzen.

Das Grauwertprofil kann als Gaußsches Profil folgendermaßen berechnet werden:

$$I(x) = I_{surf} * e^{-\frac{x^2}{2*\sigma^2}}, \tag{1}$$

wobei:

$I(x)$ - aktuelle Helligkeit, die der zu untersuchende Punkt auf der Kante aufweist, der sich in der Entfernung $x$ vom Profilmaximum befindet;

$I_{surf}$ - Oberflächenhelligkeit, die auf dem Profilmaximum erstmalig und sicher auftritt;

$x$ - die Entfernung des zu untersuchenden Punktes von dem Punkt, der das Profilmaximum aufweist.

Die wichtigsten Punkte auf dem Grauwertprofil für das vorliegenden Verfahren sind Stellen, die eine Entfernung von dem Maximum des Profils haben, die der einfachen und der zweifachen Standardabweichung des Gaußschen Profils entsprechen **(Fig. 2).**

Die einfache Standardabweichung $\sigma$ ausgehend vom Maximum des Profils zeigt auf einen Punkt, an dem das Grauwertprofil einen Wendepunkt $I_{turn}$ (turn point) besitzt. Hier kann sich damit theoretisch eine Kante 3 befinden:

$$I_{turn} = I_{surf} * \xi_1 \tag{2}$$

wobei:

$I_{surf}$ — die Oberflächenhelligkeit;
$\xi_1$ — der Wendepunktkoeffizient:

$$\xi_1 = e^{-\frac{1}{2}}. \tag{3}$$

Die zweifache Standardabweichung 2*σ ausgehend vom Maximum des Profils zeigt auf einen Punkt, an dem das Grauwertprofil die Intensität des Strahlrands hat und sich damit der Hintergrund 1 befindet:

$$I_{bgrd} = I_{surf}*\xi_2, \tag{4}$$

wobei:

$\xi_2$ — der Randpunktkoeffizient:

$$\xi_2 = e^{-2}. \tag{5}$$

Der Abstand zwischen den beiden Punkten, welche die Werte $I_{turn}$ und $I_{bgrd}$ aufweisen, entspricht ebenso der Standardabweichung σ und ist vom jeweiligen Grauwertprofil **(Fig. 2)** streng abhängig. Das Verhältnis zwischen diesen Werten ist jedoch für alle möglichen Grauwertprofile, die über eine Kante 3 verlaufen, konstant und stellt einen minimalen Helligkeitsfaktor $\eta_0$ dar. Nach (2) bis (5) gilt:

$$\eta_0 = \frac{I_{bgrd}}{I_{turn}} = \frac{\xi_2}{\xi_1} = e^{-\frac{3}{2}}. \tag{6}$$

Damit stellt der Helligkeitsfaktor $\eta_0$ ein minimales Verhältnis zwischen den Helligkeiten der frühest möglichen Kantenposition *3* und dem Hintergrund *1* dar.

Aus dem Grauwertprofil **(Fig. 2)** kann mit Hilfe bekannter konventioneller Rechenmethoden, z.B. die Methode der kleinsten Quadrate, die Standardabweichung σ ermittelt werden.

Einer der wichtigsten Parameter des Grauwertprofils ist die Teststrecke, mit der das Grauwertprofil abgesucht werden soll, um die Position der zu untersuchenden Kante 3 auf dem Grauwertprofil finden zu können.

Die Länge dieser Teststrecke $L_0$ darf dabei nicht kleiner als der Abstand zwischen dem Wendepunkt $I_{turn}$ und dem Randpunkt (Hintergrundhelligkeit $I_{bgrd}$) sein, was genau der Standardabweichung σ des Grauwertprofils entspricht. Gleichzeitig darf die Teststrecke $L_0$ die doppelte Größe der Standardabweichung σ nicht überschreiten. Sonst wird die Teststrecke größer als der gesamte Übergangsbereich *8* zwischen dem Hintergrund *1* und der Oberfläche *2* **(Fig.2).** Dann kann die Kantensuche nur nach der kantenspezifischen minimalen Helligkeitssteigung $\Delta I_0$, ohne Berücksichtigung der kantenspezifischen minimalen Helligkeit $I_0$, die eine wichtige Bedingung für die adaptive Kantenerkennung darstellt, durchgeführt werden. Deshalb soll gelten:

$$\sigma < L_0 < 2*\sigma. \tag{7}$$

Dies bedeutet, dass eine Kante *3* anwesend ist, solange die folgenden Bedingungen innerhalb der Teststrecke $L_0$ erfüllt sind:

$$I_{max} \geq I_0 ; \tag{8}$$

$$\Delta I = I_{max} - I_{min} \geq \Delta I_0 , \tag{9}$$

wobei:

$$\frac{I_{min}}{I_{max}} = \eta \geq \eta_0 \, , \tag{10}$$

$I_{max}$    - die lokale maximale Helligkeit innerhalb der Teststrecke $L_0$;
$I_{min}$    - die lokale minimale Helligkeit innerhalb der Teststrecke $L_0$;
$\Delta I$    - die lokale Helligkeitssteigung innerhalb der Teststrecke $L_0$ ;
$\eta$    - der lokale Helligkeitsfaktor innerhalb der Teststrecke $L_0$ .

Zur Bestimmung der Parameter $I_0$ und $\Delta I_0$ werden folgende Grenzfälle betrachtet. Wenn der Endpunkt der Teststrecke $L_0$ bereits die Oberfläche **2** erreicht hat:

$$I_{max} = I_{surf} \, , \tag{11}$$

ist die Kante 3 noch immer innerhalb dieser Teststrecke. Dann folgt aus (10):

$$I_{min} = I_{max} * \eta_0. \tag{12}$$

Die lokale minimale Helligkeit $I_{min}$ entspricht dabei noch nicht der Oberflächenhelligkeit ($I_{min} < I_{surf}$) aber nicht mehr der Hintergrundhelligkeit ($I_{min} > I_{bgrd}$). Sie weist nun auf einen Übergangsbereich **8** zwischen dem Hintergrund **1** und der Oberfläche **2,** in dem sich eine Kante **3** befinden kann, und bestimmt damit die minimale Helligkeit $I_0$. Die kantenspezifische minimale Helligkeit $I_0$ kann dann mit Hilfe von (12) und (11) folgendermaßen berechnet werden:

$$I_0 = I_{surf} * \eta_0, \tag{13}$$

Befindet sich der Endpunkt der Teststrecke $L_0$ bereits in einer Position, die der Helligkeit $I_0$ entspricht, und der Startpunkt noch auf dem Hintergrund **1**, soll im Falle einer wirklichen Kante erst die Bedingung (9) erfüllt sein. D. h. die Suche nach einer Kante darf nur dann angefangen werden, wenn die lokale Helligkeitssteigung $\Delta I$ innerhalb der Teststrecke $L_0$ die kantenspezifische minimale Helligkeitssteigung $\Delta I_0$ erreicht. Unter der Annahme, dass der Startpunkt der Teststrecke $L_0$ sich im günstigsten Fall in einer Position befindet, die den Helligkeitswert null aufweist, kann die kantenspezifische minimale Helligkeitssteigung $\Delta I_0$, die die Startbedingungen für die Kantensuche bestimmt, folgendermaßen definiert werden:

$$\Delta I_0 = I_0 - 0 = I_0 = I_{surf} * \eta_0. \tag{14}$$

Damit kann eine Kante **3** zwischen den zwei folgenden Positionen und nur dort vorhanden sein. Die erste Position entspricht dem Endpunkt der $L_0$, wenn die Bedingungen (8) und (9) zum ersten Mal innerhalb der Teststrecke $L_0$ gleichzeitig erfüllt sind. Die zweite Position entspricht dem Startpunkt der Teststrecke $L_0$, wenn die Bedingungen (8) und (9) zum letzten Mal innerhalb der Teststrecke $L_0$ gleichzeitig erfüllt sind.

Nun können die Bedingungen für die Erkennung eines Fehlers **6** auf einer Oberfläche **2** (**Fig. 1**) definiert werden. Der Fehler **6** bildet auf einem Licht-und-Schatten-Bild genauso wie der Hintergrund **1** einen dunklen Bereich auf der hellen Oberfläche **2**. Ebenso gibt es zwischen dem Fehler **6** und der Oberfläche **2** auch eine Kante. Aus diesem Grund kann Erkennung eines Fehlers **6** als Kantensuche durchgeführt werden.

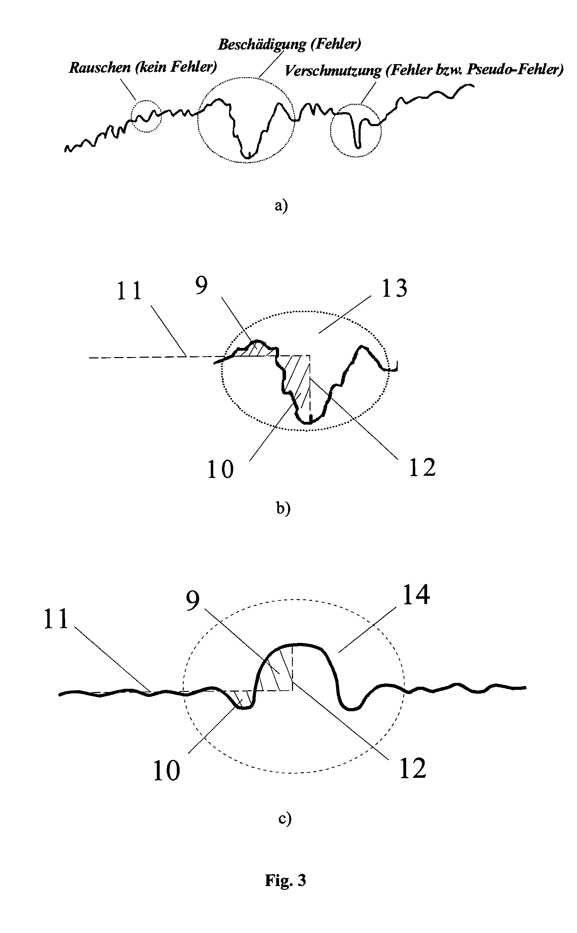

Ein Grauwertprofil, das entlang der Suchlinie **5** im Testbereich **4** gewonnen wurde, weist lokale Minima und Maxima auf (**Fig. 3, a**). Falls Suchlinie **5** durch einen Fehler **6** verläuft, soll die Strecke des gewonnen Grauwertprofils zwischen einem Maximum und dem zugehörigen Minimum eine lokale Standardabweichung $\sigma_{loc}$ *(local)* aufweisen, die nicht größer als die Soll-Standardabweichung $\sigma_0$ ist, die an einer typischen Kante **3** gewonnen wurde:

$$\sigma_{loc} \leq \sigma_0. \tag{15}$$

Diese Bedingung für eine existierende Kante soll sowohl an der linken als auch an der rechten Seite eines Fehlers **6** gelten:

$$\sigma_{loc\_left} \leq \sigma_0 \; ; \qquad (16)$$

$$\sigma_{loc\_right} \leq \sigma_0 \; . \qquad (17)$$

Die zu untersuchenden lokalen Minima und Maxima sollen aber zuerst ermittelt werden. Für diese braucht man eine Teststrecke, die logischerweise nicht größer als der vierfache Wert der Soll-Standardabweichung $\sigma_0$ sein darf:

$$S_0 \geq 4 * \sigma_0. \qquad (18)$$

Falls das Grauwertprofil quer zu einer Kante verläuft, soll die lokale minimale Helligkeit $I_{min\_loc}$, die möglicherweise noch nicht das absolute Minimum des zu suchenden Fehlers **6** ist, den lokalen Wendepunkt des Grauwertprofils $I_{turn}$ unterschreiten, wo sich theoretisch eine Kante befinden kann. Damit unterscheidet sich die lokale maximale Helligkeit $I_{max\_loc}$ von der lokalen minimalen Helligkeit $I_{min\_loc}$ genügend, um eine zwischen diesen lokalen Extremwerten bestehende Kante sicher erkennen zu können. Dann sollen nach (2) sowohl für die linke als auch für die rechte Kante eines zu suchenden Kandidat *(candidate)* zum Fehler folgende Bedingung erfüllt sein:

$$I_{min\_loc} \leq I_{cand\_loc\_left} \; ; \qquad (19)$$

$$I_{min\_loc} \leq I_{cand\_loc\_right} \; , \qquad (20)$$

wobei:

$I_{cand\_loc\_left}$ — die minimale Helligkeit, die ein Fehlerkandidat zum Fehler und der linken Kante aufweisen soll:

$$I_{cand\_loc\_left} = I_{max\_loc\_left} * \xi_1 \; ; \qquad (21)$$

$I_{cand\_loc\_right}$ — die minimale Helligkeit, die ein Fehlerkandidat und der rechten Kante aufweisen soll:

$$I_{cand\_loc\_right} = I_{max\_loc\_right} * \xi_1 \; ; \qquad (22)$$

$\xi_1$ — der Wendepunktkoeffizient, der die Intensität eines Strahles am Wendepunkt seiner Intensitätsverteilung bestimmt:

$$\xi_1 = e^{-\frac{1}{2}}.$$

Die weitere Untersuchung des Grauwertprofils zwischen den beiden erkannten Kanten eines möglichen Fehlers besteht darin, dass das dort ermittelte Helligkeitsminimum $I_{min\_loc\_abs}$, welches das absolute Minimum zwischen den beiden lokalen Maxima darstellt, mit dem lokalen maximalen zulässigen Helligkeitswert eines Fehlers $I_{def\_loc}$ *(defect)* verglichen werden muss. Nach (13) kann der Helligkeitswert $I_{def\_loc}$ folgendermaßen definiert werden:

$$I_{def\_loc} = I_{max\_loc} * \eta_0, \qquad (23)$$

wobei:

$I_{max\_loc}$ - der Helligkeitswert, der beispielsweise dem größeren der beiden lokalen maximalen Helligkeitswerte $I_{max\_loc\_left}$ und $I_{max\_loc\_right}$ entspricht.

Sofern gilt:

$$I_{min\_loc\_abs} \leq I_{def\_loc}, \qquad (24)$$

gehört die zu untersuchende Strecke zwischen den beiden gefundenen Kanten zu dem gesuchten Fehler.

Die exakten Positionen der Kanten können nach unterschiedlichen bekannten Verfahren (Methoden der digitalen Bildsignalverarbeitung / Piero Zamperoni. - Braunschweig / Wiesbaden: Friedr. Vieweg & Sohn, 1989; Digitale Bildverarbeitung / Bernd Jähne. - 4. Aufl. - Berlin, Heidelberg, etc.: Springer, 1997), u.a. mit Subpixel-Genauigkeit (A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991) ermittelt werden.

Auf diese Art und Weise muss der gesamte Testbereich 4 untersucht werden. Alle gefundene Strecken, die zu einem Fehler gehören, sollen dabei markiert werden. Damit werden sämtliche Fehler partiell markiert und mit Hilfe bekannter konventioneller Konturverfolgungsmethoden (Handbuch der Operatoren für die Bildverarbeitung / Reinhard Klette, Piero Zamperoni. -Braunschweig / Wiesbaden: Friedr. Vieweg & Sohn, 1995) segmentiert und analisiert.

Die Schwellwerte $I_{max\_loc\_left}$, $I_{max\_loc\_right}$ und $I_{def\_loc}$ die für die Detektierung des Fehlers **6** verantwortlich sind, können so definiert werden, dass die Helligkeit des zu suchenden Fehlers auch dabei berücksichtigt wird, die als Hintergrundhelligkeit $I_{bgrd}$ bei der Fehlerkantenerkennung betrachtet werden kann. In dem Fall kann diese Schwellwerte folgendermaßen definiert werden:

$$I_{cand\_loc\_left} = (I_{max\_loc\_left} - I_{bgrd}) * \xi_1 + I_{bgrd} ; \qquad (25)$$

$$I_{cand\_loc\_right} = (I_{max\_loc\_right} - I_{bgrd}) * \xi_1 + I_{bgrd} ; \qquad (26)$$

$$I_{def\_loc} = (I_{max\_loc} - I_{bgrd}) * \eta_0 + I_{bgrd} . \qquad (27)$$

Nach (4) und (25) - (27):

$$I_{cand\_loc\_left} = I_{max\_loc\_left} *((1 - \xi_2) * \xi_1 + \xi_2); \qquad (28)$$

$$I_{cand\_loc\_right} = I_{max\_loc\_right} * ((1 - \xi_2) * \xi_1 + \xi_2); \qquad (29)$$

$$I_{def\_loc} = I_{max\_loc} * ((1 - \xi_2) * \eta_0 + \xi_2) , \qquad (30)$$

Falls eine Beschädigung der Oberfläche (z.B. ein Riss **13**) von einem anderem Objekttyp (z.B. eine Verschmutzung), der als Pseudo-Fehler bezeichnet werden kann, unterschieden werden kann und sicher als Fehler identifiziert werden muss, sollen weitere lokale Merkmale des Fehlers benutzen werden. In diesem Fall kann ein Wulst **9** *(bulge)* und eine Rinne **10** *(hollow)* an jeder Kante des zu suchenden Fehlers benutzt werden, die aufgrund von Zerreißen und Entspannen eines Materials, besonders eines Doppelschichtmaterials, entstehen **(Fig. 3, b).** Damit lässt sich z.B. einen Riss **13** von einer Verschmutzung deutlich unterscheiden.

Das Grauwertprofil schließt an den entsprechenden Bereichen mit der waagerechte Achse **11,** die dem Niveau der lokalen Oberflächenhelligkeit $I_{surf\_loc}$ entspricht, und der senkrechte Achse **12,** die durch das absolute Minimum des Fehlers **6** verläuft, die Flächen $A_{bul}$ und $A_{holl}$ ein, die auf einen Wulst **9** und eine Rinne **10** zurückzuführen sind **(Fig. 2, b).** Der Wert $I_{surf\_loc}$ kann dabei beispielsweise aus der lokalen Umgebung vor dem Wulst **9** mit Hilfe konventioneller Methoden, z.B. Geradeapproximation, ermittelt werden.

Patentgemäß müssen diesen Flächen mit einander verglichen werden. Sofern ein lokaler Verhältniswert

$$\vartheta_{loc} = \frac{A_{bul}}{A_{holl}},$$ (31)

den minimalen Fehlerschwellwert $\vartheta_{def}$ nicht unterschreitet:

$$\vartheta_{loc} \geq \vartheta_{def},$$ (32)

kann ein zu suchender Fehler **6** von einem möglichen Pseudo-Fehler unterschieden werden **(Fig. 3, a).**

Dieser minimale Fehlerschwellwert $\vartheta_{def}$ kann, z.B. nach Erfahrungswerten festgestellt und im weiteren als Referenzwert verwendet werden.

Eine Blase 14 auf einer rauhen Oberfläche (Fig. 3, c) kann ebenso auf die gleiche Art und Weise wie ein Riss **13 (Fig. 3, b)** als Fehler erkannt werden. Allerdings stellt eine Blase **14** ein exakt umgekehrtes Verhältnis zwischen einem Wulst **9** und einer Rinne **10** dar, als eine Beschädigung, z.B. ein Riss **13**. Um das oben beschriebene Verfahren zu adaptiver Fehlererkennung für die Erkennung einer Blase **14** verwenden zu können, muss eine Invertierung der Parameter bei der Extremwertsuche oder eine Invertierung des gesamten Grauwertbildes durchgeführt werden.

Damit lässt das oben beschriebene adaptive Verfahren einen auf einer inhomogenen Oberfläche vorhandenen Fehler explizit erkennen.

Literatur

1. Digitale Bildverarbeitung / Bernd Jähne. - 4. Aufl. - Berlin, Hedelberg, etc.: Springer, 1997

2. Industrielle Bildverarbeitung / Christian Demant, Bernd Streicher-Abel, Peter Waszkewitz. - Berlin; Heidelberg: Springer, 1998.

3. Patent DE 19902401 C2.

4. Patent DE 4131778 C2.

5. Patent EP 0750272 B1.

6. Patent EP 0807297 B1.

7. Patent DE 4435796 C1.

8. Technische Optik: Grundlagen und Anwendungen / Gottfried Schröder. - 7.Aufl. - Würzburg: Vogel, 1990 (Kamprath-Reihe), S. 88.

9. A Comparison of Algorithms for Sub-pixel Peak Detection / D. K. Naidu, R. B. Fisher. Department of Artifical Intelligence, University of Edinburgh, Scotland, U.K., DAI Research Paper No. 553, Oktober 17, 1991.

10. Methoden der digitalen Bildsignalverarbeitung / Piero Zamperoni. - Braunschweig / Wiesbaden: Friedr. Vieweg & Sohn, 1989.

11. Handbuch der Operatoren für die Bildverarbeitung / Reinhard Klette, Piero Zamperoni. - Braunschweig / Wiesbaden: Friedr. Vieweg & Sohn, 1995.

Bezugszeichenliste

| 1 | Hintergrund |
|---|---|
| 2 | Oberfläche |
| 3 | Kante zwischen dem Hintergrund und der Oberfläche |
| 4 | Testbereich auf der Oberfläche |
| 5 | Suchlinie im Testbereich auf der Oberfläche |
| 6 | Fehler auf der Oberfläche |
| 7 | Suchlinie quer zur Kante zwischen dem Hintergrund und der Oberfläche |
| 8 | Übergangsbereich zwischen dem Hintergrund und der Oberfläche |
| 9 | Wulst an einem Fehler |
| 10 | Rinne an einem Fehler |
| 11 | Waagerechte Achse, die dem Niveau der lokalen Oberflächenhelligkeit entspricht |
| 12 | Senkrechte Achse, die durch das absolute Minimum (Riss) bzw. Maximum (Blase) des Fehlers verläuft |

**13** Grauwertprofil quer zu einem Riss

**14** Grauwertprofil quer zu einer Blase

**Patentansprüche**

1. Verfahren zur adaptiven Erkennung eines Fehlers **6** auf einer inhomogenen Oberfläche **2,** z.B. einer Metalloberfläche, der auf einem mit einem Kamerasensor aufgenommenen Bild mit Hilfe kantenbasierender Segmentierungsmethoden gesucht wird, **dadurch gekennzeichnet, dass** alle benötigten lokalen Merkmale dynamisch aus dem Grauwertprofil ermittelt werden, das entlang einer Suchlinie **5** gewonnen wird, mit der ein Testbereich **4** abgetastet werden muss, wobei das Grauwertprofil als Gaußverteilung behandelt wird.

Patentgemäß ist die Erkennung eines Fehlers **6** folgendermaßen durchzuführen.

Zuerst muss die Soll-Standardabweichung $\sigma_0$ ermittelt werden, die als kantencharakteristischer Parameter für die Erkennung eines Fehlers dienen wird:

$$\sigma_0 = \sigma_{0\_min} + \Delta\sigma,$$

wobei:

$\sigma_{0\_min}$   - die Standardabweichung des Grauwertprofils entlang einer Suchlinie **7,** die quer zur einer typischen Kante **3** zwischen dem Hintergrund **1** und der Oberfläche 2 verläuft und mit Hilfe bekannter konventioneller Rechenmethoden, z.B. die Methode der kleinsten Quadrate, ermittelt wird, und die auch als Mittelwert der an mehreren Stellen der zu untersuchenden Kante **3** ermittelten Werte $\sigma_{0\_min}$ berechnet werden kann;

$\Delta\sigma$   - zulässige Abweichung der Standardabweichung $\sigma_0$ von dem minimalen Wert $\sigma_{0\_min}$, z.B. 0.5, die nach Erfahrungswerten festgestellt werden muss.

Dabei geht man davon aus, dass der Fehler **6** genauso wie der Hintergrund **1** beispielsweise immer dunkler als die Oberfläche **2** ist. Ansonsten sollen die Rollen der Oberfläche, des Hintergrundes sowie des Fehlers vertauscht werden.

Ein Grauwertprofil, das entlang der Suchlinie **5** im Testbereich **4** gewonnen wurde, soll nach lokalen Minima und Maxima abgesucht werden. Dafür kann z.B. eine Teststrecke benutzt werden, die entlang der Suchlinie 5 verschoben werden soll, wobei lokale Minima und

Maxima nicht auf den Randpunkten der Teststrecke liegen dürfen. Die Länge der Teststrecke $S_0$ kann patentgemäß folgendermaßen definiert werden:

$$S_0 \geq 4^*\sigma_0.$$

Die Untersuchung des Grauwertprofils innerhalb der Teststrecke $S_0$ soll beispielsweise von links nach rechts durchgeführt werden. Zuerst werden diejenigen Positionen ermittelt, die ein lokales Minimum $I_{min\_loc}$ (*local*) und ein davor liegendes lokales Maximum $I_{max\_loc\_left}$ aufweisen. Diese sollen überprüft werden, ob sie zu einem möglichen Fehler gehören können. Man spricht dabei von einem Kandidat (candidate) zum Fehler. Sofern gilt:

$$I_{min\_loc} \leq I_{cand\_loc\_left},$$

wobei:

$I_{cand\_loc\_left}$   - die minimale Helligkeit, die ein Fehlerkandidat und der linken Kante aufweisen soll:

$$I_{cand\_loc\_left} = I_{max\_loc\_left} {}^*\xi_1 ;$$

$\xi_1$   - der Wendepunktkoeffizient, der die Intensität eines Strahles am Wendepunkt seiner Intensitätsverteilung bestimmt:

$$\xi_1 = e^{-\frac{1}{2}}.$$

muss die lokale Standardabweichung $\sigma_{loc\_letf}$ des Grauwertprofils zwischen dem gefundenen lokalen Maximum und lokalen Minimum mit Hilfe bekannter konventioneller Rechenmethoden, z.B. die Methode der kleinsten Quadrate, ermittelt und mit der Soll-Standardabweichung $\sigma_0$ verglichen werden. Falls gilt:

$$\sigma_{loc\_left} \leq \sigma_0 ;$$

kann sich dort die linke Kante eines möglichen Fehlers befinden.

Anschließend muss das Grauwertprofil rechts des gefundenen lokalen Minimums nach dem Auftreten eines weiteren lokalen Maximums bzw. eines Minimum-Maximum-Paares geprüft werden. Falls eins existiert, für das gilt:

$$I_{min\_loc} \leq I_{cand\_loc\_right} ;$$

wobei:

$I_{cand\_loc\_right}$       - die minimale Helligkeit, die ein Fehlerkandidat and der rechten Kante aufweisen soll:

$$I_{cand\_loc\_left} = I_{max\_loc\_left} *\xi_1 ;$$

und

$$\sigma_{loc\_right} \leq \sigma_0 ,$$

kann sich dort die rechte Kante eines möglichen Fehlers befinden.

Die weitere Untersuchung des Grauwertprofils zwischen den beiden erkannten Kanten eines möglichen Fehlers besteht darin, dass das dort ermittelte Helligkeitsminimum $I_{min\_loc\_abs}$ , welches das absolute Minimum zwischen den beiden lokalen Maxima darstellt, mit dem lokalen maximalen zulässigen Helligkeitswert eines Fehlers $I_{def\_loc}$ (defect) verglichen werden muss.:

$$I_{def\_loc} = I_{max\_loc} *\eta_0,$$

wobei:

$I_{max\_loc}$       - der Helligkeitswert, der beispielsweise dem größeren der beiden lokalen Maxima $I_{max\_loc\_left}$ und $I_{max\_loc\_right}$ entspricht;

$\eta_0$       - der Helligkeitsfaktor, der eine allgemeine grundlegende Konstante für die Kantenerkennung darstellt:

$$\eta_0 = \frac{\xi_2}{\xi_1} = e^{-\frac{3}{2}};$$

$\xi_2$       - der Randpunktkoeffizient, der die Intensität eines Strahles an seinem Rand bestimmt:

$$\xi_2 = e^{-2},$$

Sofern gilt:

$$I_{\text{min\_loc\_abs}} \leq I_{\text{def\_loc}},$$

gehört die zu untersuchende Strecke zwischen den beiden gefundenen Kanten zu dem gesuchten Fehler **6**. Danach soll wieder die linke Kante eines nachfolgenden Fehlers entlang des Grauwertprofils gesucht werden. Die genauen Positionen der gefundenen Kanten können nach unterschiedlichen bekannten Verfahren, u.a. mit Subpixel-Genauigkeit ermittelt werden.

Der ganze Testbereich **4** soll auf diese Art und Weise abgetastet werden, wobei die Suchlinie **5** in einer angegebenen Richtung, z.B. von oben nach unten, durch den Testbereich **4** verschoben wird. Alle gefundene Strecken, die zu einem Fehler gehören, sollen dabei markiert werden. Damit werden sämtliche Fehler partiell markiert und mit Hilfe bekannter konventioneller Konturverfolgungsmethoden segmentiert und analysiert.

2. Verfahren nach Anspruch 1, **dadurch gekennzeichnet, dass** ein Fehler **6,** auf einer Oberfläche **2,** erkannt werden kann, indem die minimale Helligkeit, die ein Fehlerkandidat an der linken Kante $I_{\text{cand\_loc\_left}}$ bzw. rechten Kante $I_{\text{cand\_loc\_right}}$ aufweisen soll, sowie der lokale maximale zulässige Helligkeitswert eines Fehlers $I_{\text{def\_loc}}$ folgendermaßen berechnet werden:

$$I_{\text{cand\_loc\_left}} = I_{\text{max\_loc\_left}} * ((1 - \xi_2) * \xi_1 + \xi_2),$$

$$I_{\text{cand\_loc\_right}} = I_{\text{max\_loc\_right}} * ((1 - \xi_2) * \xi_1 + \xi_2);$$

$$I_{\text{def\_loc}} = I_{\text{max\_loc}} * ((1 - \xi_2) * \eta_0 + \xi_2).$$

3. Verfahren nach Anspruch 1 und 2, **dadurch gekennzeichnet, dass** eine Beschädigung der Oberfläche (z.B. ein Riss **13**) von einem anderem Objekttyp (z.B. eine Verschmutzung), der als Pseudo-Fehler bezeichnet werden kann, unterschieden werden kann und sicher als Fehler identifiziert wird, wobei zusätzliche lokale Merkmale wie das Auftreten eines Wulstes **9** (bulge) und einer Rinne **10** (hollow) für die Fehlererkennung benutzt werden sollen, die aufgrund eines Zerreißens und Entspannens eines Materials, besonders eines Doppelschichtmaterials, an jeder Kante eines Fehlers entstanden sind.

Patentgemäß sollen die Flächen $A_{bul}$ und $A_{holl}$ miteinander verglichen werden, die auf einen Wulst **9** und eine Rinne **10** zurückzuführen sind. Diese Flächen werden von dem Grauwertprofil in den entsprechenden Bereichen und der waagerechten Achse **11,** die dem Niveau der lokalen Oberflächenhelligkeit $I_{surf\_loc}$ entspricht, und der senkrechten Achse **12,** die durch das absolute Minimum des Fehlers **6** verläuft, eingeschlossen, wobei der Wert $I_{surf\_loc}$ aus der lokalen Umgebung vor dem Wulst **9** mit Hilfe konventioneller Methoden, z.B. Geradeapproximation, ermittelt werden kann. Sofern ein lokaler Verhältniswert

$$\vartheta_{loc} = \frac{A_{bul}}{A_{holl}}$$

den minimalen Fehlerschwellwert $\vartheta_{def}$ nicht unterschreitet, der nach Erfahrungswerten festgestellt und im weiteren als Referenzwert verwendet werden kann:

$$\vartheta_{loc} \geq \vartheta_{def},$$

kann ein zu suchender Fehler 6 von einem möglichen Pseudo-Fehler unterschieden werden.

4. Verfahren nach Anspruch 1 bis 3, **dadurch gekennzeichnet, dass** eine Blase **14** auf einer rauen Oberfläche auf gleiche Art und Weise wie ein Riss **13** als Fehler erkannt werden kann, wobei vor dem oben beschriebenen Verfahren eine Invertierung der Parameter bei der Extremwertsuche oder eine Invertierung des gesamten Grauwertbildes durchgeführt werden muss.

5. Verfahren nach Anspruch 1 bis 4, **dadurch gekennzeichnet, dass** das Grauwertprofil, das entlang einer Suchlinie **7** gewonnen wird, die quer zu einer typischen Kante **3** verläuft und evtl. mehrmals angelegt werden kann, sowohl aus einer einzelnen Pixelreihe als auch als Mittelwertkurve aus mehreren, z.B. drei, entlang zur Suchlinie **7** liegenden benachbarten Pixelreihen gebildet werden kann.

6. Verfahren nach Anspruch 1 bis 5, **dadurch gekennzeichnet, dass** die Soll-Standardabweichung $\sigma_0$ nach Erfahrungswerten festgestellt und im weiteren als typischer Wert verwendet werden kann.

7. Verfahren nach Anspruch 2 bis 4, **dadurch gekennzeichnet, dass** ein Fehler **6** auf einer Oberfläche **2**, dessen Helligkeit sich von der Oberflächenhelligkeit geringfügig unterscheidet, erkannt werden kann, indem für die Berechnung der minimalen Helligkeit, die ein Fehlerkandidat and der linken Kante $I_{cand\_loc\_left}$ bzw. an der rechten Kante $I_{cand\_loc\_right}$ aufweisen soll, sowie des lokalen maximalen zulässigen Helligkeitswertes eines Fehlers $I_{def\_loc}$ anstatt des Randpunktkoeffizientes $\xi_2$ ein Helligkeitskoeffizient $\xi$ verwendet wird, dessen Größe im Bereich:

$$\xi_2 \leq \xi < 1$$

nach Erfahrungswerten festgestellt werden kann.

8. Verfahren nach Anspruch 1 bis 4, **dadurch gekennzeichnet, dass** ein Fehler **6** auf einer Oberfläche **2**, dessen Helligkeit sich von der Oberflächenhelligkeit geringfügig unterscheidet, erkannt werden kann, indem für die Berechnung der minimalen Helligkeit, die ein Fehlerkandidat and der linken Kante $I_{cand\_loc\_left}$ bzw. an der rechten Kante $I_{cand\_loc\_right}$ aufweisen soll, anstatt der Konstante $\xi_1$ für das Wendepunktkoeffizient ein Helligkeitsfaktor $\xi$ verwendet wird, dessen Größe im Bereich:

$$\xi_1 \leq \xi < 1$$

nach Erfahrungswerten festgestellt werden kann.

9. Verfahren nach Anspruch 1 bis 4, **dadurch gekennzeichnet, dass** ein Fehler **6** auf einer Oberfläche **2**, dessen Helligkeit sich von der Oberflächenhelligkeit geringfügig unterscheidet, erkannt werden kann, indem für die Berechnung des lokalen maximalen zulässigen Helligkeitswertes eines Fehlers $I_{def\_loc}$ anstatt der Konstante $\eta_0$ für die Kantenerkennung ein Helligkeitsfaktor $\eta$ verwendet wird, dessen Größe im Bereich:

$$\eta_0 \leq \eta < 1$$

nach Erfahrungswerten festgestellt werden kann.

10. Verfahren nach Anspruch 1 bis 9, **dadurch gekennzeichnet, dass** nur jede einzelne zu untersuchende Kurve aber nicht das Bild selbst geglättet werden soll.

11. Verfahren nach Anspruch 1 bis 10, **dadurch gekennzeichnet, dass** eine morphologische Filterung für die Glättung der zu untersuchenden Kurven verwendet werden soll.

**Fig. 1**

**Fig. 2**

Rauschen (kein Fehler)

Beschädigung (Fehler)

Verschmutzung (Fehler bzw. Pseudo-Fehler)

a)

11  9  13

10  12

b)

11  9  14

10  12

c)

Fig. 3